# EUROPEAN PATENT APPLICATION

(11) **EP 4 814 330 A1**
(43) Date of publication of application: **30.09.2026**
(21) Application number: 25166225.0
(22) Date of filing: 26.03.2025
(51) Int. Cl.: F16D 3/00, F16D 3/16, F16F 3/02, F16F 7/12

(54) **COUPLING DEVICE COMPRISING ROTATION DAMPING STRUCTURE**

(71) Applicant: Hitachi Energy Ltd, 8050 Zürich (CH)
(72) Inventor: Van den Brink, Bram, 771 51 Ludvika (SE); Backström, Daniel, 724 61 Västerås (SE)
(74) Representative: AWA Sweden AB

(57) **Abstract**

A coupling device (100) is provided. The coupling device comprises a universal joint (110) and a rotation damping structure (120). The universal joint is connected to a first support member (112) and a second support member (114). The universal joint allows relative rotation between the two support members about a first axis (X) and a second axis (Y) perpendicular to the first axis. The rotation damping structure (120) comprises four damping elements (330). Each damping element comprises a base section (332), a connector section (334), and a yielding section (336). The yielding section extends between the base section and the connector section. The yielding section is configured to plastically deform by a relative rotation (ω_{X}, ω_{Y}) between the base section and the connector section. A first pair (130a) of the damping elements are arranged on opposite sides of the universal joint along the first axis. The base sections of each of the first pair of damping elements are fastened to the first support member. A second pair (130b) of the damping elements are arranged on opposite sides of the universal joint along the second axis. The base sections of each of the second pair of damping elements are fastened to the second support member. The connector sections (134a) of each of the first pair of damping elements are fastened to the connector sections (134b) of each of the second pair of damping elements such that the connector sections (134) of the four damping elements form a rigid loop (450) around the universal joint.

## Description

### Technical field

The present application relates to the field of coupling devices. More specifically, it relates to a coupling device comprising a universal joint and a rotation damping structure.

### Background

A universal joint or coupling is a joint for connecting two rigid elements, such as two rigid shafts. A universal joint allows relative rotation between the two rigid elements about two perpendicular axes. This makes the universal joint suitable for connecting two rigid shafts whose axes are inclined relative to each other, but also for suspension of objects as the universal joint may allow the suspended object to swing freely about two axes.

For example, a universal joint may be used for a suspended high voltage valve system. Standing converter valves face structural stress during high seismic ground motion. Instead, the converter valves may be suspended from, e.g., a ceiling of a valve hall. In the event of seismic acceleration, the valve is allowed to swing more or less freely, acting as a pendulum.

In such a system, a high voltage valve unit may be suspended from a load carrying support structure by means of rigid suspending insulators. Universal joints may be used to connect the high voltage valve unit to the rigid suspending insulators, and to connect the rigid suspending insulators to the load carrying support structure.

However, while the universal joint allows relative rotation about the two axes, in some applications it is desirable to dampen or limit such rotation. In the example of a hanging valve system, it may be preferable that the high voltage valve unit is not allowed to swing freely in the event of seismic acceleration. Instead, the movement at one or both pivot points may be dampened, to reduce or dampen the swinging of the high voltage valve unit.

There is therefore a need for coupling devices damping the movement of a universal joint.

### Summary

One general object of the present disclosure is to improve rotational damping of a universal joint. This and other objects are achieved by means of a coupling device as defined in the appended independent claim. Other embodiments are defined by the dependent claims.

According to an aspect of the present disclosure, a coupling device is provided. The coupling device comprises a universal joint and a rotation damping structure. The universal joint is connected to a first support member and a second support member. The universal joint allows relative rotation between the first support members and the second support member about a first axis and a second axis. The first axis is perpendicular to the second axis. The rotation damping structure comprises four damping elements. Each damping element comprises a base section. a connector section, and a yielding section. The yielding section extends between the base section and the connector section. The yielding section is configured to plastically deform by a relative rotation between the base section and the connector section. A first pair of the damping elements are arranged on opposite sides of the universal joint along the first axis. The base sections of each of the first pair of damping elements are fastened to the first support member. A second pair of the damping elements are arranged on opposite sides of the universal joint along the second axis. The base sections of each of the second pair of damping elements are fastened to the second support member. The connector sections of each of the first pair of damping elements are fastened to the connector sections of each of the second pair of damping elements such that the connector sections of the four damping elements form a rigid loop around the universal joint.

A universal joint may also be referred to as a cardan joint, a Hooke joint, a Spicer joint, or a Polhem joint. The coupling device may be used to couple two elements or devices, such as two rigid shafts. The elements to be coupled by the coupling device may be attached to the first and second support members.

Each of the damping elements may be referred to as a yield damper, or a yielding damper. A yield damper is a device which is configured to undergo plastic deformation when subject to a force, thereby absorbing energy of the force, e.g., a seismic event, and suppressing unwanted movement. Upon being subject to a rotational force between the base element and connector element, the yielding section of each damping element may go through an elastic deformation prior to reaching the plastic deformation. Dimensions and materials of the damping element may be selected such that the yielding section quickly reaches the plastic deformation state upon being subject to a rotational force between the base element and the connector element. When the yielding section has undergone a certain level of plastic deformation, the damping element may need to be replaced.

The four damping elements may be arranged in parallel with the universal joint. The four damping elements may be accessible and replaceable without decoupling the coupling device from the elements or devices it is arranged to couple. Thus, the four damping elements may easily be replaced after, e.g., a seismic event.

The rotation damping structure comprising the four damping elements may mimic the configuration of the universal joint. The universal joint allows movement about two perpendicular axes. The rotation damping structure of the present disclosure may decouple the damping of rotational motion about the two axes. The first pair of damping elements may be arranged to damp rotation about the first axis. The second pair of damping elements may be arranged to damp rotation about the second axis.

Since each of the damping elements is only subject to motion about one axis, the shape of the damping element may be optimized for that axis alone.

According to some embodiments, the first axis may intersect the yielding sections of each of the first pair of damping elements. The second axis may intersect the yielding sections of each of the second pair of damping elements.

Aligning the yielding sections with the respective axes may further provide that each of the yielding sections is only subject to motion about the axis with which it is aligned. Aligning the yielding sections with the respective axes may facilitate optimizing or designing the damping elements to dampen motion about the respective axes.

According to some embodiments, for each damping element, the yielding section may extend longitudinally between the base section and the connector section. The base section may extend laterally on two sides of the yielding section. The connector section may extend laterally on two sides of the yielding section.

The base section may extend laterally to improve and facilitate a strong fastening of the base section to the support member. The connector section may extend laterally a width corresponding to the width of the universal joint, such that the connector sections of the four damping elements may form the rigid loop around the universal joint. A width of the connector section of a damper element may define the width of the damping element.

The yielding section may have a width smaller than a width of the connector section and a width of base section. The yielding section may define a waist portion of the damping element. The yielding section may have a shape defined such that, upon a relative rotation between the base section and the connector section, the yielding portion will undergo plastic deformation. At the same time, the base section and connector section may retain their original shape.

The base section and the connector section may both extend at the same two sides of the yielding section. Thus, the damping element may have the general shape of a capital I or a capital T with serifs.

Alternatively, the yielding section may extend diagonally between the base section and the connector section, forming a general Z shape.

According to some embodiments, for each damping element, the connector section may comprise a first side section extending toward the base section at a first side of the yielding section. The connector section of each damping element may comprise a second side section extending toward the base section at a second side of the yielding section. Each side section of each damping element may be configured to be fastened to a side section of a neighboring damping element.

The connector section may at least partially extend perpendicularly from a longitudinal axis of the damping element. A side section of the connector section may at least partially extend in parallel with the longitudinal axis of the damping element. The connector section may at least partially extend diagonally in relation to the longitudinal axis of the damping element.

An inner surface of a connector section, such as a side section, may be configured to be attached to a lateral surface of a different connector section, such as a lateral surface of a side section.

According to some embodiments, each of the first pair of damping elements may be arranged in a respective plane perpendicular to the first axis. Each of the second pair of damping elements may be arranged in a respective plane perpendicular to the second axis.

According to some embodiments, each damping element may be symmetrical about a longitudinal axis (U).

According to some embodiments, the first pair of damping elements have a larger width than the second pair of damping elements. Inner surfaces of the connector sections of each of the first pair of damping elements may be configured to be fastened to respective lateral surfaces of the connector sections of each of the second pair of damping elements.

According to some embodiments, for each damping element, the yielding section may be centered in relation to the base section. A first side of the connector section of each damping element may extend laterally a first distance from the yielding section. A second side of the connector section of each damping element may extend laterally a second distance from the yielding section. The first distance may be being larger than the second distance. An inner surface of the first side of the connector section of each damping element may be configured to be fastened to a lateral surface of the second side of a connector section of a neighboring damping element.

In other words, the base section may extend the same distance in opposite, lateral, directions from the yielding section. The connector section may extend a first distance in one lateral direction from the yielding section, and a second, smaller, distance from the yielding section in an opposite lateral direction.

A difference between the first distance and the second distance may be equivalent to a thickness of the damping element, such as a thickness of the connector section of the damping element, or a thickness of the first side for the connector section.

According to some embodiments, each of the damping elements may be constituted by a single piece of material.

The damping element may be cut from a single piece of material, molded as a single piece of material, or otherwise shaped into a single piece of material.

Alternatively, the damping element may be formed by joining together separate pieces of material.

According to some embodiments, each of the damping elements may comprise at least one of low carbon steel, aluminum, lead, copper, and a shaped memory alloy.

It is noted that other embodiments using all possible combinations of features recited in the above-described embodiments may be envisaged. Thus, the present disclosure also relates to all possible combinations of features mentioned herein.

### Brief description of drawings

Exemplifying embodiments will now be described in more detail, with reference to the following appended drawings:
Figure 1 is an illustration of a coupling device in accordance with some embodiments;
Figure 2 is an illustration of a universal joint in accordance with some embodiments;
Figure 3 is an illustration of a damping element in accordance with some embodiments;
Figure 4 is an illustration of a rotation damping structure in accordance with some embodiments;
Figure 5 is an illustration of a coupling device, in accordance with some embodiments, undergoing rotation about the first axis;
Figure 6 is an illustration of a coupling device, in accordance with some embodiments, undergoing rotation about the second axis; and
Figure 7 is a close up view of a yielding section of a damping element in accordance with some embodiments.

As illustrated in the figures, the sizes of the elements and regions may be exaggerated for illustrative purposes and, thus, are provided to illustrate the general structures of the embodiments. Like reference numerals refer to like elements throughout.

### Detailed description

Exemplifying embodiments will now be described more fully hereinafter with reference to the accompanying drawings in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

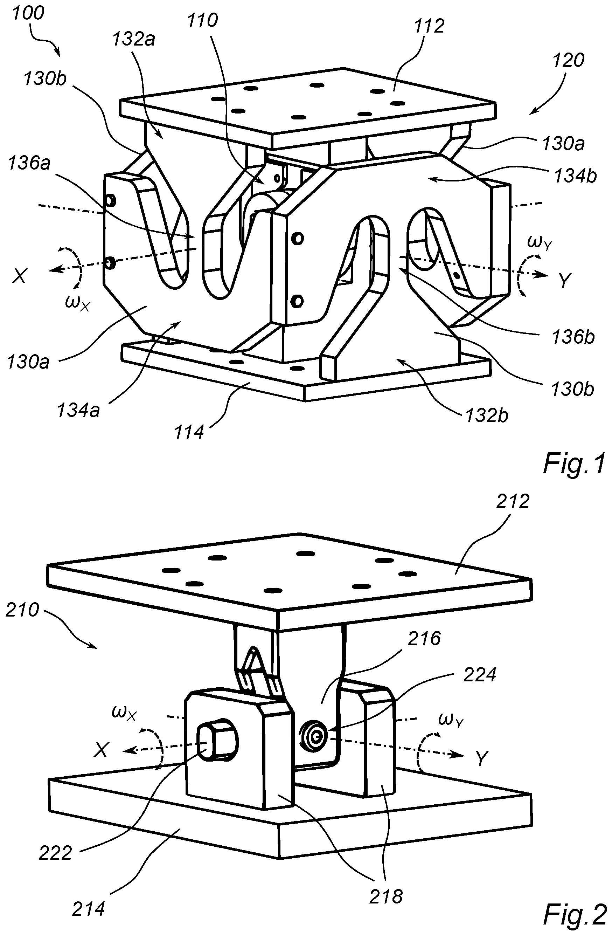

With reference to Figure 1, a coupling device 100, in accordance with some embodiments, will be described. The coupling device 100 is illustrated in perspective view.

The coupling device 100 comprises a universal joint 110 connected to a first support member 112 and a second support member 114. The first support member 112 may be connected to a first element to be coupled using the coupling device 100. The second support member 114 may be connected to a second element to the coupled using the coupling device 100.

The universal joint 110 allows relative rotation between the first support member 112 and the second support member 114 about a first axis X and a second axis Y. The first axis X is perpendicular to the second axis Y.

The coupling device 100 further comprises a damping arrangement 120 comprising four damping elements 130a, 130b arranged forming a rigid loop or ring around the universal joint 110. Each of the damping elements comprise a base section 132a, 132b, a connector section 134a, 134b, and a yielding section 136a, 136b extending between the base section 132a, 132b, and the connector section 134a, 134b.

The damping elements 130a, 130b are arranged in two pairs. A first pair of the damping elements 130a are arranged on opposite sides of the universal joint 110 along the first axis X. The base sections 132a of the first pair of damping elements 130a are fastened to the first support member 112. The second pair of damping elements 130b are arranged on opposite sides of the universal joint 110 along the second axis Y. The second pair of damping elements 130b is arranged upside down in relation to the first pair of damping elements 130a. The base sections 132b of each of the second pair of damping elements 130b are fastened to the second support member 114.

In Figure 1, each of the first pair of damping elements 130a is arranged in a respective plane perpendicular to the first axis X. Each of the second pair of damping elements 130b is arranged in a respective plane perpendicular to the second axis Y.

The connector sections 134a of each of the first pair of damping elements 130a are fastened to the connector sections 134b of each of the second pair of damping elements 130b. Thereby, the four damping elements 130a, 130b form a rigid loop around the universal joint 110.

The first pair of damping elements 130a are arranged such that the first axis X intersects the yielding sections 136a of each of the first pair of damping elements 130a. The second pair of damping elements 130b are arranged such that the second axis Y intersects the yielding sections 136b of each of the second pair of damping elements 130b.

The yielding sections 136a, 136b are configured to plastically deform by a relative rotation ω_{X}, ω_{Y} between the base section 132a, 132b and the connector section 134a, 134b of the damper element 130a, 130b. The arrangement of the damping elements 130a, 130b provides that any rotation ω_{X} between the between the two support members 112, 114 about the first axis X is dampened by the first pair of damping elements 130a. Specifically, upon a rotational force applied about the first axis X, the yielding sections 136a of the first pair of damping elements 130a may first undergo a short period of elastic deformation, followed by a plastic deformation. The plastic deformation of the yielding section 136a will absorb the energy from the rotational force, thereby damping rotational movement caused by the force. Similarly, any rotation ω_{Y} between the two support members 112, 114 about the second axis Y may be dampened by the plastic deformation of the yielding sections 136b of the second pair of damping elements 130b.

Figure 2 illustrates a universal joint 210 connected to a first support element 212 and a second support element 214. The universal joint 210 may be equivalent to the universal joint 110 described above with reference to Figure 1.

A linking structure including two ears 216 extends from the first support element 212 in a direction toward the second support element 214. The two ears each include an opening in the form of a circular through hole, allowing a circular shaft to be rotatably arranged therein. Two further ears 218 extend from the second support element 214 in a direction toward the first support element 212. The two further ears 218 also each include an opening in the form of a form of a circular through hole, allowing a circular shaft to be rotatably arranged therein. The pair of second ears 218 are rotated 90 degrees with regard to the pair of first ears 216.

A first shaft 222 is arranged in the openings of the second two ears 218. The second two ears 218 and the second support element 214 are rotatable ω_{X} about the first shaft 222, such that the first shaft defines a first rotational axis X. A second shaft 224 is arranged in the openings of the first two ears 216. The first two ears 216 and the first support element 212 are rotatable ω_{Y} about the second shaft 224, such that the second shaft defines a second rotational axis Y, which is perpendicular to the first axis X. The first shaft 222 and the second shaft 224 are connected. Thereby, the universal joint 210 allows relative rotational motion between the first support element 212 and the second support element 214 about the first axis X and the second axis Y. For example, the first shaft 222 and the second shaft 224 may be connected to form a cross-shaped bar.

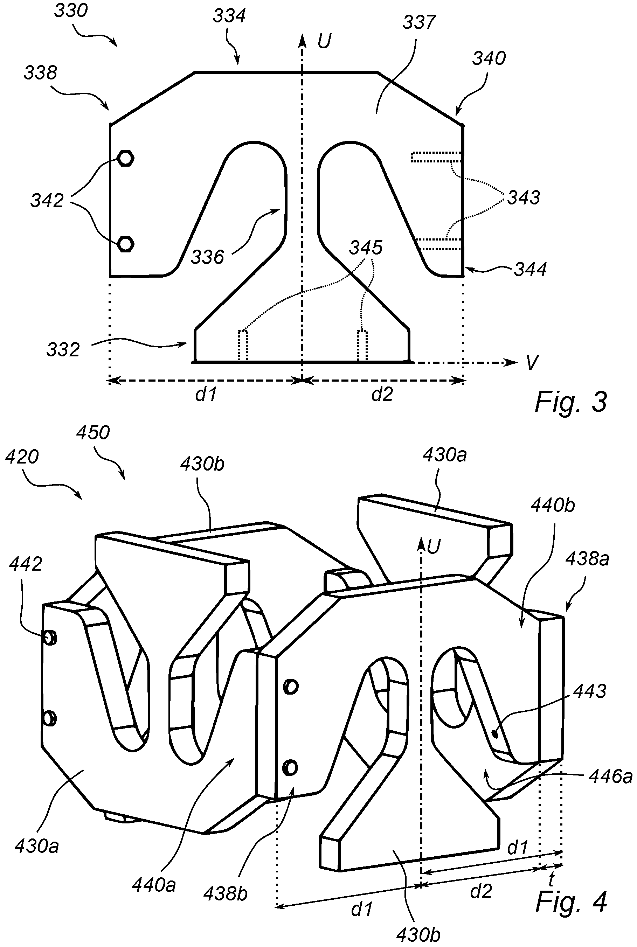

Figure 3 is an illustration of a damping element 330 viewed from the front. The damping element 330 may be equivalent to the damping elements 130a, 130b described above with reference to Figure 1.

The damping element 330 has a longitudinal axis U and a lateral axis V. The longitudinal axis is aligned with a middle of the yielding section 336 of the damping element 330. The yielding section 336 extends longitudinally, along the longitudinal axis U, from a base section 332 to a connector section 334.

The base section 332 is centered about the longitudinal axis U. In Figure 3, the base section 332 is symmetrical about the longitudinal axis U. The base section 332 comprises connection apertures 345, such as drilled holes, for facilitating mechanical connection to a support member, such as the first and second support members 112, 114 of the coupling device 100 described above with reference to Figure 1. The connection apertures 345 may for example be configured to receive a screw to fasten the damping element 330 to a support member.

The connector section 334 extends laterally, along the lateral axis V, from the yielding section 336 in two opposite directions. In some embodiments, the connector section 334 may also be symmetrical about the longitudinal axis U. However, in Figure 3, a first side of the connector section 334 extends a first distance d1 from the longitudinal axis U, while a second side of the connector section 334 extends a second, shorter, distance d2 from the longitudinal axis U. The first side of the connector section 334 comprises a first side section 338. The first side section 338 extends toward the base section, at least partially along the longitudinal axis U. The second side of the connector section 334 comprises a second side section 340. The second side section 340 extends toward the base section, at least partially along the longitudinal axis U. The first side section 338 is configured to be fastened to a second side section 340 of a neighboring damping element 330.

Further reference will now be made to now made to Figure 4. In Figure 4, damping elements 430a, 430b, equivalent to the damping element 330 of Figure 3, are arranged in a rotation damping structure 420. The rotation damping structure 420 may be equivalent to the rotation damping structure 120 described above with reference to Figure 1.

As can be seen in Figure 4, the first side section 438a, 438b of each damping element 430a, 430b is attached to a second side section 440a 440b of the neighboring damping element 430a, 430b. Specifically, an inner surface 446a of a first side section 438a is attached against a lateral surface (344 in Figure 3) of a second side section 440b of a neighboring damping element 430b.

Turning back to Figure 3, the first side section 338 comprises through holes 342 extending from a front surface 337 to a back surface of the damping element 330. The front surface 337 may be arranged as an inner surface 446a or an outer surface in an arrangement such as the rotation damping structure 420 of Figure 4. The lateral surface 344 of the second side section 340 comprises openings 344. Thus, when arranged in the rotation damping structure of Figure 4, screws, or other fastening means, may be used to attach the first side section 438a to a second side section 440b of a neighboring damping element 430b. Screws, or other fastening means, may be inserted through the though holes 442 in a first side section 438a of a first damping element 430a and into the openings 443 in a second side section 440b of a neighboring damping element 430b.

As previously mentioned, the first side of the connector element 334 may extend a first distance d1 from the longitudinal axis U. **The** second side of the connector element 334 may extend a second distance d2 from the longitudinal axis U. As is indicated in Figure 4, the first distance d1 may be equal to the second distance d2 plus a thickness t of the first side section 438a. As a result, the yielding sections 336 of each of the pairs of damping elements 430a, 430b may become aligned with each other, and with the corresponding rotational axis X, Y (indicated in Figures 1 and 2).

**In** Figure 3, the damping element 330 is illustrated from the front. **The** front surface 337 may be a first major surface of the damping element 330. **The** front surface 337 may be planar. The plane of the front surface 337 may be parallel with the longitudinal axis U and the lateral axis V. The damping element 330 may comprise a second major surface opposite to the front surface 337. The second major surface may be planar and may be parallel with the front surface 337. As a result, the damping element may have an even thickness t in a direction perpendicular to the longitudinal axis and the lateral axis.

The damping element 330 may be constituted by a single piece of material. The damping element 330 may comprise at least one of low carbon steel, aluminum, lead, copper, and shaped memory alloy.

The rotation damping structure 120, 420 may mimic the functionality of the universal joint 110, 220, in that motion about the first axis X may be decoupled from motion about the second axis Y. The arrangement of the damping elements 130a, 130b may provide a decoupling of the damping of rotation about the two axes.

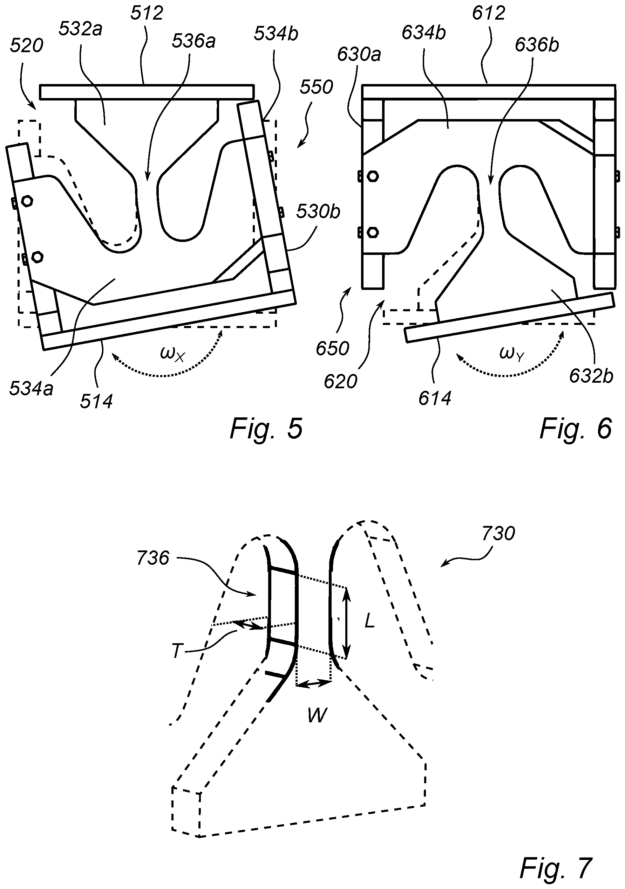

Figure 5 illustrates a rotation damping structure 520, which may be equivalent to any of the rotation damping structures 120, 420 described above with reference to preceding figures. The rotation damping structure 520 is viewed from one of the first pair of damping elements 530a. Upon rotation ω_{X} of the second support member 114 about the first axis X, the second pair of damping elements 530b, which are attached to the second support member, are subject to a tensile force and a compressive force, respectively, between the base section connected to the second support element 514 and the connector section forming part of the rigid loop 550. The damping elements 530b may be highly resistant to tensile and compressive forces, therefore the moment is transferred from the second support member 114 via the rigid loop 550 to the second pair of damping elements 530b. The first pair of damping elements 530a, on the other hand, are subject to a rotational force between the base section 532a, connected to the first support element 512, and the connector section 534a, forming part of the rigid loop 550. The yielding sections 536a of the first pair of damping elements 530a are configured to yield and plastically deform upon rotational movement/force between the base section 532a and the connecting section 534a, which dampens the movement ω_{X}.

Thus, upon relative movement ω_{X} between the first support element 512 and the second support element 514 about the first axis X, the rigid loop 550 may move together with the second support element 514. Therefore, upon rotation only about the first axis X, only the first pair of damping elements 530a perform the damping.

Figure 6 illustrates a rotation damping structure 620, which may be equivalent to any of the rotation damping structures 120, 420, 520 described above with reference to preceding figures. The rotation damping structure 620 is viewed from one of the second pair of damping elements 530b. Upon rotation ω_{Y} of the second support member 114 about the second axis Y, the second pair of damping elements are subject to a rotational force between the base element 532b and the connector element 534b. The yielding sections 536b of the second pair of damping elements 530b are configured to yield and plastically deform upon rotational movement between the base section 532b and the connecting section 534b, which dampens the movement ω_{Y}.

Thus, upon relative movement ω_{Y} between the first support element 612 and the second support element 612, the rigid loop 650 may move together with the first support element 612. Therefore, upon rotation only about the second axis Y, only the second pair of damping elements 630b perform the damping.

Figure 7 is an illustration of a yielding section 736 of a damping element 730. The damping element 730 may be equivalent to any of the damping elements described above with reference to preceding figures.

As each damping element in the rotation damping structure is only subject to rotational forces about one of the axes, the damping element 730 may be optimized to damp rotation about that axis alone.

For example, a length L, width W and/or thickness T of the yielding section 736 may be adapted or selected to damp rotation about the corresponding axis.

An angle at which the damping element 730 starts acting, i.e., starts undergoing plastic deformation, may depend on the width W and the length L of the yielding section 736. The maximum moment which the damper 730 may withstand may depends on the width W, the length L, and the thickness T of the yielding section. Thus, the thickness T may be selected to reach the desired maximum moment.

The person skilled in the art realizes that the present invention by no means is limited to the preferred embodiments described above. On the contrary, many modifications and variations are possible within the scope of the appended claims.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the drawings, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. A coupling device (100) comprising:
a universal joint (110) connected to a first support member (112) and a second support member (114), the universal joint allowing relative rotation between the two support members about a first axis (X) and a second axis (Y) perpendicular to the first axis; and
a rotation damping structure (120) comprising four damping elements (330), each damping element comprising a base section (332), a connector section (334), and a yielding section (336) extending between the base section and the connector section, the yielding section being configured to plastically deform by a relative rotation (ω_{X}, ω_{Y}) between the base section and the connector section;
wherein a first pair (130a) of the damping elements are arranged on opposite sides of the universal joint along the first axis, wherein the base sections (132a) of each of the first pair of damping elements are fastened to the first support member;
wherein a second pair (130b) of the damping elements are arranged on opposite sides of the universal joint along the second axis, wherein the base sections (132b) of each of the second pair of damping elements are fastened to the second support member; and
wherein the connector sections (134a) of each of the first pair of damping elements are fastened to the connector sections (134b) of each of the second pair of damping elements such that the connector sections (134) of the four damping elements form a rigid loop (450) around the universal joint.

2. The coupling device of claim 1, wherein:
the first axis (X) intersects the yielding sections (136a) of each of the first pair of damping elements; and
the second axis (Y) intersects the yielding sections (136b) of each of the second pair of damping elements.

3. The coupling device of any one of the preceding claims, wherein for each damping element:
the yielding section extends longitudinally (U) between the base section and the connector section;
the base section extends laterally (V) on two sides of the yielding section; and
the connector section extends laterally on two sides of the yielding section.

4. The coupling device of any of the preceding claims, wherein:
for each damping element, the connector section (334) comprises a first side section (338) extending toward the base section at a first side of the yielding section and a second side section (340) extending toward the base section at a second side of the yielding section; and
each side section of each damping element is configured to be fastened to a side section of a neighboring damping element.

5. The coupling device of any of the preceding claims, wherein:
each of the first pair of damping elements are arranged in a respective plane perpendicular to the first axis; and
each of the second pair of damping elements are arranged in a respective plane perpendicular to the second axis.

6. The coupling device of any one of the preceding claims, wherein each damping element is symmetrical about a longitudinal axis (U).

7. The coupling device of any one of the preceding claims, wherein the first pair of damping elements have a larger width than the second pair of damping elements, and wherein inner surfaces (446a) of the connector sections of each of the first pair of damping elements are configured to be fastened to respective lateral surfaces (344) of the connector sections of each of the second pair of damping elements.

8. The coupling device of any of claims 1-5, wherein for each damping element:
the yielding section is centered in relation to the base section;
a first side of the connector section extends laterally a first distance (d1) from the yielding section and a second side of the connector section extends laterally a second distance (d2) from the yielding section, the first distance being larger than the second distance; and
an inner surface (446a) of the first side of the connector section is configured to be fastened to a lateral surface (344) of the second side of a connector section of a neighboring damping element.

9. The coupling device of any of the preceding claims, wherein each of the damping elements is constituted by a single piece of material.

10. The coupling device of any of the preceding claims, wherein each of the damping elements comprises at least one of low carbon steel, aluminum, lead, copper, and shaped memory alloy.
